# EUROPEAN PATENT APPLICATION

(11) **EP 0 913 427 A1**
(43) Date of publication of application: **06.05.1999**
(21) Application number: 97119099.6
(22) Date of filing: 01.11.1997
(51) Int. Cl.: C08L 23/10

(54) **Thermoplastic multiphase polymeric composition**

(71) Applicant: Bernhard Rustige GmbH und Co. Kommanditgesellschaft, D-28195 Bremen (DE)
(72) Inventor: Kirchner, Claus-Peter, 6122 Menznau (CH); Pàc, Jiri, 62100 Brno (CZ); Fritz, Hans-Gerhard, Prof. Dr., 73066 Uhingen (DE)
(74) Representative: Hoeger, Stellrecht & Partner

(57) **Abstract**

The present invention proposes a thermoplastic multiphase polymeric composition which meets the specific needs in automotive applications and comprises a continuous remeltable matrix component (A) of a polypropylene polymer type containing a polyethylene copolymer component (B) in a micro-dispersed state therein, said polyethylene component (B) being cross-linked and comprising an amount of a hydrocarbon type extender oil (C) of at least 20 parts per 100 parts of component (B), said matrix component (A) being present in an amount of up to 100 parts per 100 parts of component (B) and said component (B) comprising polyethylene copolymer having a specific density ρ_{20°c} of 0.84 to 0.88 g/cm³.

The invention further relates to a process for manufacturing such a thermoplastic multiphase polymeric composition.

## Description

The present invention relates to a thermoplastic multiphase polymeric composition and a process for manufacturing the same.

The present invention provides for a thermoplastic multiphase polymeric composition which is an improvement over the polymeric composition described in DE 44 02 943 A1. This reference describes an advantageous flexible two-phase thermoplastic polymeric material, the wide range of use of which encompasses manufacturing of formed articles like bellows, sealing profiles and other functional shaped articles, flexible hoses and cable isolations.

However, in some applications it is desired to improve some of the properties of this polymeric material in order to meet the specific needs in automotive applications.

This object of the present invention is met by the thermoplastic multiphase polymeric composition defined in claim 1.

Claim 1 defines not a two-phase system but a three-phase system comprising a continuous remeltable matrix component (A) of a polypropylene polymeric type containing a polyethylene copolymer component (B) in a micro-dispersed state therein. Component (B) is cross-linked and comprises an amount of a hydrocarbon type extender oil (C) as a third phase in an amount of at least 20 parts per 100 parts of component (B). In a thermoplastic multiphase polymeric composition according to the present invention, the matrix component (A) is present in an amount of up to 120 parts per 100 parts of component (B) and said component (B) comprises a polyethylene copolymer, preferably an ULDPE polymer, having a specific density of ρ_{20°c} of 0.84 to 0.88 g/cm³.

The use of the third phase, namely the extender oil (C) ensures that a grafting reaction which is desirable on the polyethylene copolymer molecule chain is controllable and occurs smoothly. Furthermore, in the end product, the elasticity is improved.

While a composition comprising the extender oil in an amount of below 20 parts per 100 parts of the polyethylene copolymer component (B) does not show remarkably improved properties of the thermoplastic multiphase polymeric composition, an upper limit may be found at 200 parts per 100 parts of component (B), which however is mainly based on economical considerations.

Furthermore, the addition of the extender oil (C) allows for a homogeneous distribution of the catalysts for the hydrolysis and condensation reaction leading to a uniform cross-linking of the polyethylene copolymer of component (B). This not only provides for a uniformly cross-linked polyethylene copolymer component (B), but ensures also that there will be no separation of the matrix phase (A) and the micro-dispersed component (B).

The addition of a phenolic antioxidant is recommendable in order to reduce the formation of gel particles.

As a consequence of adding the extender oil (C) as a third phase in the thermoplastic multiphase polymeric composition the concentration of the cross-linking agent for cross-linking the polyethylene copolymer of component (B) has to be used in a higher amount in order to provide for comparable results.

While in DE 44 02 943 A1 an amount of approximately three parts per 100 parts of polyethylene component (B) were recommended, in the present case it is recommended to use the cross-linking agent in excess of 4 parts of per 100 parts of the polyethylene copolymer of component (B). The amount of cross-linking agent to be added may extend up to 20 parts per 100 parts of copolymer of component (B) depending on the molecular weight of the cross-linking agent.

An advantageous process for manufacturing the inventive thermoplastic multiphase polymeric composition is defined in claim 23.

One of the additional advantages of the inventive thermoplastic multiphase polymeric composition obtained according to the above-mentioned process is that during the life time of the products the melt flow index remains constant, while in a product obtained according to conventional processes some changes in the melt flow index still may occur. This advantages are due to the addition of the cross-linking catalyst, namely the hydrolysis reaction catalyst in two separate steps. It is noted that the hydrolysis reaction catalyst also promotes a condensation reaction providing for the cross-linking of component (B).

Further advantageous embodiments are subject matter of dependent claims and will be described in more detail by way of the following examples.

### EXAMPLES

The composition of the polymeric compositions according to Reference Example 1 and Examples 2 to 5 are given in Table 1.

The respective amounts of the various components used in the Examples as represented in Table 1 are all given in parts by weight.

The hydrolytic agent used is composed of 100 parts by weight ethylene glycol, 100 parts by weight water and 1 part by weight dibutyl tin dilaurate as a hydrolysis reaction catalyst which also promotes the condensation reaction (cross-linking catalyst).

The properties found for these compositions are summarized in Table 2.

Reference Example 1 provides for a control sample not containing the hydrocarbon extender oil component (C). The sample tested was prepared by using a standard compounding procedure. The VTMS component used in Reference Example 1 did not include any cross-linking catalyst. Further no phenolic antioxidant was used in this Reference Example. Dynamic cross-linking was performed with the cross-linking catalyst contained in the hydrolytic agent only.

The resilience properties of this sample as represented by the compression and tension set parameters reported in Table 2 were found to be very poor. Further the hardness was found to be too high so that such sample was not qualified for typical rubber applications.

Further, particles could be detected in this sample which could not be dispersed in the polypropylene matrix. This effect is due to covalent C-C bonds between the ULDPE polymer chains which lead to a TPE (thermoplastic elastomer) inhomogeneous phase structure which makes it difficult to process the composition.

Examples 2 and 3 represent samples according to the present invention and contain in addition to the components of the sample of Reference Example 1 the extender oil (C) in increasing amounts. The extender oil was added during the course of the grafting reaction which ensures that the grafting reaction starts smoothly and the formation of C-C bonds between ULDPE polymer chains is almost eliminated. In consequence formation of gel particle which are not dispersible in the polypropylene matrix is greatly suppressed.

The cross-linking agent VTMS with the exception of Example 5 was added to the polyethylene copolymer component (B) and did not includ a cross-linking catalyst. Only in Example 5 dibutyl tin dilaurate in the amount of 0.045 parts by weight per 100 parts ULDPE was admixed at an early processing stage and a further amount of this cross-linking catalyst was added in the form of the hydrolytic agent during a later stage.

Extender oil added to the TPE in quantities exceeding 20 parts per 100 parts by weight of component (B) have a substantial effect on all of the TPE properties. The resilience properties are very much improved: the compression set is reduced to the range of 50 to 51 % and 42 to 44 % respectively; the residual deformation at 100 % extension (tension set) has been reduced from 39 to 24 and 21 %, respectively.

Additionally the variation in the amount of extender oil present allows for the preparation of TPE showing a wide range of hardness values, especially in the range of Shore 75 A to Shore 35 D.

In Example 4 phenolic antioxidant (Irganox 1330) has been used which was metered together with the cross-linking agent VTMS and an organic peroxide allowing for a moderation of the grafting reaction so as to completely avoid formation of unwanted C-C bonds between the polymer chains of the ULDPE component and thereby preventing formation of non-dispersible gel particles.

The phase structure of this sample is due to the lack of gel particles perfectly regular/homogeneous and the resulting resilience and other properties are found to be further improved (cf. Table 2).

Example 5 shows the influence of an increased amount of cross-linking catalyst (dibutyl tin dilaurate), the additional amount of it being added together with the cross-linking agent VTMS, peroxide and phenolic antioxidant at an eaely stage of the manufacturing process so as to disperse the same prior to starting the cross-linking reaction.

The use of the increased amount of hydrolytic agent results in an increased rate of the cross-linking reaction so that the cross-linking reaction could readily been completed during the compounding step and no subsequent, static cross-linking occurs. As is apparent from Table 2 the resilience properties are further enhanced. As pointed out earlier already the addition of part of the cross-linking catalyst at an early stage combined with the addition of a further amount when initiating the cross-linking reaction ensures that this reaction is completed during the compounding procedure in a dynamic way and no additional static cross-linking occurs.

A process for obtaining the inventive polymeric composition is described in general below:

The inventive thermoplastic multiphase polymeric composition is preferably prepared on a co-rotating, intermeshing twin screw type extruder by the compounding technique and by way of the so-called dynamic cross-linking. The compounding machine preferably used consists of four sections, namely the grafting, mixing, cross-linking and evacuation sections.

In the first section (grafting section) vinyl trimethoxy silane is injected into the extruder barrel (containing component (B) at a temperature of 120 to 130° C) in admixture with peroxide initiator, phenolic antioxidant, hydrolysis catalyst (cross linking catalyst). The mixture is heated up to the temperature where the peroxide initiator starts to decompose, namely its half life-time temperature (190-210°) and VTMS is grafted onto the ULDPE during a period of time amounting to 8 times the half life-time of the peroxide initiator. In the course of the grafting reaction also the paraffinic oil is injected (preferably at the beginning of the grafting step). When the grafting reaction is completed the low viscosity mixture passes to the mixing section where it is very intensively mixed with PP. The difference between the viscosity of the grafted ULDPE mixed with the paraffinic oil and PP leads to a phase structure where ULDPE creates a continuous phase and PP a dispersed one.

After good homogenization of the mixture the hydrolytic agent is injected into the extruder barrel and the VTMS grafted ULDPE is in the course of the mixing process selectively cross-linked. The cross-linking reaction rapidly increases ULDPE viscosity and the original phase structure is inverted resulting in the desired phase structure where PP creates the continuous phase and the cross-linked ULDPE the dispersed one.

Compounding is finished by the melt devolatilisation, where the hydrolytic fluid and reaction water are removed.

**TABLE 1**

| EXAMPLES | 1 (Ref.) | 2 | 3 | 4 | 5 |
|---|---|---|---|---|---|
| ULDPE (density 0.860 g/cm³) | 100 | 100 | 100 | 100 | 100 |
| PP-Borealis BC 245 P | 100 | 100 | 100 | 100 | 100 |
| Paraffinic oil (230 mm²/ at 20° C | - | 60 | 120 | 120 | 120 |
| Vinyl trimethoxy silane | 3 | 4.5 | 4.5 | 4.5 | 4.5 |
| Dibutyl tin dilaurate | - | - | - | - | 0.045 |
| 2,5 Dimethyl 2,5 ditertbutylperoxy hexane | 0.06 | 0.06 | 0.06 | 0.06 | 0.06 |
| Phenolic antioxidant | - | - | - | 0.03 | 0.03 |
| Hydrolytic agent | 1 | 1 | 1 | 1 | 1 |

**TABLE 2**

| EXAMPLES | 1 (Ref) | 2 | 3 | 4 | 5 |
|---|---|---|---|---|---|
| Compression set (23° C/ 70 h) [%]*1) | 87 | 50 | 42 | 37 | 37 |
| Compression set (70° C/ 22 h) [%]*1) | 90 | 51 | 44 | 40 | 38 |
| Compression set (100° C/ 22 h) [%]*1) | 92 | 53 | 45 | 41 | 39 |
| Number of visible gel particles [part./cm²]*2) | 24 | 5 | 4 | 0 | 0 |
| Tension set (100 % deformation, 23° C) [%]*3) | 39 | 24 | 21 | 18 | 17 |
| Hardness Shore*4) | 40D | 85A | 77A | 77A | 77A |
| Tensile strength at break [MPa]*3) | 14 | 11 | 7.2 | 7.1 | 7 |
| Elongation at break [%]*3) | 213 | 257 | 240 | 241 | 237 |

| | | | | | |
|---|---|---|---|---|---|
| *1) ASTM D 395 | | | | | |
| *2) from a melt-blown film having a thickness of approximately 20 µm an area of 10 cm x 10 cm is cut out and gel particles visible with the naked eye are counted | | | | | |
| *3) ASTM D 412 | | | | | |
| *4) ASTM D 2240 | | | | | |

## Claims

1. Thermoplastic multiphase polymeric composition comprising a continuous remeltable matrix component (A) of a polypropylene polymer type containing a polyethylene copolymer component (B) in a micro-dispersed state therein, said polyethylene component (B) being cross-linked and comprising an amount of a hydrocarbon type extender oil (C) of at least 20 parts per 100 parts of component (B), said matrix component (A) being present in an amount of up to 100 parts per 100 parts of component (B) and said component (B) comprising polyethylene copolymer having a specific density ρ_{20°c} of 0.84 to 0.88 g/cm³.

2. Polymeric composition of claim 1, wherein the copolymer of component (B) is cross-linked by use of an organofunctional silane.

3. Polymeric composition of claim 2, wherein the organofunctional silane is grafted to the polymer chains of component (B).

4. Polymeric composition of claim 2 or 3, wherein the amount of cross-linking organofunctional silane present in said component (B) exceeds 4 parts per 100 parts polyethylene of component (B).

5. Polymeric composition according to anyone of claims 1 to 3, wherein based on the weight of the polymeric composition the amount of component (A) is of from 15 to 45 % by weight, the amount of component (B) is of from 35 to 45 % by weight and the amount of the extender oil (C) is of from 10 to 50 % by weight.

6. Polymeric composition according to anyone of claims 1 to 5, wherein component (B) essentially consists of a ULDPE polymer.

7. Polymeric composition according to anyone of claims 1 to 6, wherein the polyethylene copolymer is an ethylene-octene, ethylene-butene and/or an ethylene-hexene type copolymer.

8. Polymeric composition according to anyone of claims 1 to 7, wherein component (B) has a molecular weight distribution M_{w}/Mₙ of from 1.5 to 3.0.

9. Polymeric composition according to claim 8, wherein component (B) has a molecular weight distribution M_{w}/Mₙ of approximately 2.0.

10. Polymeric composition according to anyone of claims 1 to 9, wherein component (B) has a gel content of from 60 to 95 % by weight, which is insoluble in boiling xylene.

11. Polymeric composition according to anyone of claims 1 to 10, wherein the extender oil (C) is a synthetic oil or a mineral oil of a viscosity of from 2 to 500 mm²/s at 20 °C.

12. Polymeric composition according to claim 11, wherein the mineral oil is a white mineral paraffin oil of a viscosity of 230 mm²/s at 20 °C.

13. Polymeric composition according to anyone of claims 1 to 12, wherein component (B) has an average particle size of from 0.2 to 2 µm.

14. Polymeric composition according to anyone of claims 1 to 13, wherein component (A) is selected from polypropylene homopolymer, polypropylene blockcopolymer or polypropylene random copolymer or any mixture thereof.

15. Polymeric composition according to anyone of claims 1 to 14, wherein the composition further comprises additives, especially pigments, fillers, dyes, flame retardants, stabilizers, deactivating agents for metal ions and processing auxiliary agents.

16. Polymeric composition according to anyone of claims 2 to 15, wherein component (B) has been silane grafted by the addition of a radical source, especially organic peroxides, and said organofunctional silane, especially vinyl trimethoxy silane, vinyl triethoxy silane and/or methacryloxy propyl trimethoxy silane.

17. Polymeric composition according to claim 16, wherein the grafting step is performed in the presence of a phenolic antioxidant.

18. Polymeric composition according to claim 17, wherein the concentration of phenolic antioxidant is from 0.05 to 5 % by weight, based on the weight of component (B).

19. Polymeric composition according to anyone of claims 3 to 18, wherein the grafted component (B) has been dynamically cross-linked during the process of mixing same with component (A) in a suitable mixer in the presence of a silane group cross-linking agent.

20. Polymeric composition according to claim 19, wherein the agent for cross-linking the silane grafted component (B) contains the necessary amount of water needed for the hydrolysis reaction of the silane groups, where applicable additives in the form of alcohols with boiling temperatures above 200° C, especially glycerol or ethanediol and if necessary catalysts for hydrolysis and condensation reaction, especially organo tin compounds and/or acids or bases and, where appropriate, surfactants as auxiliary emulsifying agents.

21. Polymeric composition according to claim 20, wherein the hydrolysis and condensation reaction catalyst, preferably dibutyl tin dilaurate is added in admixture with the organofunctional silane, a peroxide initiator and the phenolic antioxidant.

22. Polymeric composition according to claim 20 or 21, wherein the concentration of condensation catalyst used is from 0.05 to 5 % by weight, based on the weight of the organofunctional silane used.

23. Process for manufacturing the polymeric composition according to anyone of claims 1 to 22, wherein in a mixing step organofunctional silane, peroxide initiator, phenolic antioxidant, hydrolysis reaction catalyst and the extender oil (C) are admixed with component (B), the mixture being subsequently heated to a temperature above the half life-time temperature of the peroxide initiator in order to start the grafting reaction to silane graft the polymeric chains of component (B) while component (A) is added in the course of or subsequently to the grafting reaction and thoroughly admixed at a temperature above the melting temperature of polypropylene component (A), wherein subsequently while continuing the mixing operation water, preferably together with an alcohol with a boiling temperature above 200°C, and an additional amount of hydrolysis reaction catalyst are added in order to subject component (B) to a cross-linking reaction and wherein the mixing operation is still continued until a morphologically stable structure of micro-dispersed particles of cross-linked component (B) in the polypropylene matrix component (A) is obtained, both being in a swollen state by uptake of extender oil (C).

24. Process according to claim 23, wherein said mixing step is carried out by first heating component (B) above its melting point but below the half life-time temperature of the peroxide initiator.
